# EUROPEAN PATENT APPLICATION

(11) **EP 4 170 776 A1**
(43) Date of publication of application: **26.04.2023**
(21) Application number: 21203346.8
(22) Date of filing: 19.10.2021
(51) Int. Cl.: H01M 10/42, H01M 10/48, H01M 50/20, H01M 50/213

(54) **A BATTERY MODULE, A BATTERY PACK, AN ELECTRIC VEHICLE, A BMM CARRIER, A BMM ARRANGEMENT AND A METHOD FOR ASSEMBLING A BATTERY MODULE**

(71) Applicant: Samsung SDI Co., Ltd., Yongin-si, Gyeonggi-do 17084 (KR)
(72) Inventor: Ridisser, Markus, 8141 Premstätten (AT); Pucher, Matthias, 8403 Lebring (AT); Hadler, Bernhard, 8073 Feldkirchen/Graz (AT)
(74) Representative: Gulde & Partner

(57) **Abstract**

The present disclosure refers to a battery module (12), comprising: a plurality of battery cells (20), at least one cell carrier (30, 30.1, 30.2, 30.3, 30.4), and a battery management module, BMM, (21); wherein the at least one cell carrier (30, 30.1, 30.2, 30.3, 30.4) comprises a plurality of cell retainers (31), wherein each of the cell retainers (31) is adapted for holding one of the battery cells (20) in a form locking manner; wherein the BMM (21) is arranged within at least two of the cell retainers (31).

## Description

### Field of the Disclosure

The present disclosure relates to a battery module for an electric vehicle. The present disclosure also relates to a battery pack comprising the battery module, an electric vehicle comprising the battery pack, a BMM carrier, a BMM arrangement and a method for assembling a battery module.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series *(XpYs)* or multiple cells connected in series that are connected in parallel *(XsYp).*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

A battery system further includes a battery management system (BMS), which is any electronic system that manages the rechargeable battery, battery module and battery pack, such as by protecting the batteries from operating outside their safe operating area, monitoring their states, calculating secondary data, reporting that data, controlling its environment, authenticating it and/or balancing it. For example, the BMS may monitor the state of the battery as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, a BMS may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. The BMS may be also distributed, wherein a BMS board is installed at each cell, with just a single communication cable between the battery and a controller. Or the BMS may be of modular construction including a few controllers, each handling a certain number of cells, with communication between the controllers. Centralized BMSs are most economical, least expandable, and are plagued by a multitude of wires. Distributed BMSs are the most expensive, simplest to install, and offer the cleanest assembly. Modular BMSs offer a compromise of the features and problems of the other two topologies.

A BMS may protect the battery pack from operating outside its safe operating area. Operation outside the safe operating area may be indicated in case of over-current, over-voltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as through heaters, fans, air conditioning or liquid cooling.

The mechanical integration of such a battery system requires appropriate mechanical connections between the individual components, e.g. between battery cells, the BMS, and the housing. These connections must remain functional and save during the average service life of the battery system. Further, installation space and interchangeability requirements must be met, especially in mobile applications.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge, SoC, potential electrical performance, charging ability and internal resistance as well as actual or predicted power demands or surpluses of the consumers. Therefore, battery systems usually comprise a battery management system, BMS, for obtaining and processing such information on system level and further a plurality of battery module managers, also called battery management modules, BMMs, which are part of the system's battery modules and obtain and process relevant information on module level. Particularly, the BMS usually measures the system voltage, the system current, the local temperature at different places inside the system housing, and the insulation resistance between live components and the system housing. Additionally, the BMMs usually measure the individual cell voltages and temperatures of the battery cells in a battery module.

Thus, the BMS/BMU is provided for managing the battery pack, such as by protecting the battery from operating outside its safe operating area, monitoring its state, calculating secondary data, reporting that data, controlling its environment, authenticating it and/or balancing it.

In current battery packs with cylindrical cells having an axis in Z direction, battery management systems are placed within a battery module on top or on the side of the battery module, especially when placed on top crucial package space in Z is lost.

DE 10 2017 011 717 A1 discloses an electrical energy storage for a vehicle with a housing in which a number of individual cells are arranged, wherein a cell monitoring unit is arranged in a further housing which is positioned between individual cells in the housing and forms a force absorption element. The disclosed energy storage provides mechanical stability by integrating the cell monitoring unit into the cell block, since the cell monitoring unit can be handled like an individual cell during assembly. If, e.g., the cell monitoring unit with its further housing is arranged centrally with respect to the cell block, the cell monitoring unit can be regarded as a so-called module divider. Thus, in the event of damage and/or replacement, half, i.e., either the individual cells arranged to the left or to the right of the cell monitoring unit must be removed. Thus, to remove the cell monitoring unit, e.g., for maintenance and/or service, typically a plurality of individual cells needs to be removed.

EP 3 273 500 A1 discloses a battery system comprising eight cell supervision circuits and eighteen battery modules, each comprising two submodules. Each submodule comprises a stack of prismatic battery cells. One cell supervision circuit is sufficient for two battery modules. Thus, two battery modules, which correspond to four battery cell stacks, are connected to one single cell supervision circuit.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery module comprises: a plurality of battery cells, at least one cell carrier, and a battery management module, BMM; wherein the at least one cell carrier comprises a plurality of cell retainers, wherein each of the cell retainers is adapted for holding one of the battery cells in a form locking manner; wherein the BMM is arranged within at least two of the cell retainers.

According to another aspect of the present disclosure, a battery pack is provided, comprising a plurality of battery modules as described above.

Yet another aspect of the present disclosure refers to an electric vehicle comprising at least one battery module as described above and/or at least one battery pack as described above.

Yet another aspect of the present disclosure refers to a BMM carrier adapted to retain a BMM within at least two adjacent cell retainers of at least one cell carrier for a battery module.

Yet another aspect of the present disclosure refers to a BMM arrangement, comprising: at least two BMMs, a collector circuit board adapted to electrically connect the at least two BMMs with one or more battery cells, and an adapter mounted to the collector circuit board, wherein the adapter is adapted to be arranged within a cell retainer of a cell carrier in a form locking manner.

Yet another aspect of the present disclosure refers to a method for assembling a battery module as described above, wherein the method comprises the steps of: a) providing a plurality of battery cells, at least one cell carrier, and at least one battery management module, BMM; wherein the at least one cell carrier comprises a plurality of cell retainers, wherein each of the cell retainers is adapted for holding one of the battery cells in a form locking manner; and b) arranging the at least one BMM within at least two of the cell retainers.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic view of an electric vehicle according to an embodiment of the invention.
- Fig. 2: illustrates a sectional view of a battery module according to an embodiment of the invention.
- Fig. 3: illustrates a perspective view of battery module according to an embodiment of the invention.
- Fig. 4: illustrates a top view of a battery module and a collector circuit board according to an embodiment of the invention.
- Fig. 5: illustrates a perspective and semi-transparent view of a BMM carrier carrying a battery management module according to an embodiment of the invention.
- Fig. 6: illustrates a perspective view of a BMM arrangement according to an embodiment of the invention.
- Fig. 7: illustrates a perspective view of a battery pack according to an embodiment of the invention.
- Fig. 8: illustrates a perspective view of a cell carrier and a plurality of battery cells.
- Fig. 9: illustrates a perspective view of a cell assembly.
- Fig. 10: illustrates a schematic top view of a plurality of adjacently arranged cell carriers.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted.

### General Concept

According to one aspect of the present disclosure, a battery module comprises: a plurality of battery cells, at least one cell carrier, and a battery management module, BMM. The at least one cell carrier comprises a plurality of cell retainers. Each of the cell retainers is adapted for holding one of the battery cells in a form locking manner, e.g., by providing a cavity in which a battery cell can be held. Thus, the at least one cell carrier is adapted to retain the plurality of battery cells.

The BMM is arranged within at least two of the cell retainers. In other words, the BMM is held by the same cell carrier as the battery cells. Specifically, the BMM is held by two of the cell retainers that could also be used for holding at least one of the battery cells each. As the retainers for holding the battery cells are used to accommodate the BMM, no separate holder or retainer to fix the BMM inside the battery module has to be provided. Thus, the BMM is accommodated in a space-saving manner between the battery cells and within the battery module. The package optimized BMM is placed in an existing cell carrier and therefore saves space and also additional monetary savings are achievable as the manufacture of such a battery module can be performed more efficiently than in the prior art. Arranging the BMM within at least two of the cell retainers implies that the BMM is arranged closely to the battery cells which can facilitate the electrical connection between the BMM and the battery cells.

Optionally, the BMM is arranged within at least two of the cell retainers in a form locking manner to efficiently and reliably mount the BMM within the at least one cell retainer.

Optionally, the battery module comprises a BMM carrier adapted to retain the BMM within the at least two cell retainers. The BMM carrier is adapted to be arranged within at least two of the cell retainers and adapted to hold the BMM therein. Therefore, the BMM can have any shape that is suitable for being hold by the BMM carrier. E.g., the BMM can comprise a printed circuit board and an electrical connector that are retained in the BMM carrier. While the printed circuit board and the electrical connector as such would be difficult to be mounted to the at least one cell retainer, the BMM carrier has a shape that matches the at least two cell retainers for being arranged therein in a form locking manner. Thus, the BMM carrier matches the shape of the at least two cell retainers to facilitate an arrangement of the BMM in a form locking manner within the at least one cell retainer.

Optionally, the BMM carrier is arranged in two or more adjacent cell retainers. This embodiment enables that the BMM has an extension in one direction that is larger than an extension of battery cells, e.g., a diameter of one of the battery cells. For example, the BMM can comprise a printed circuit board that has an extension that is larger than the diameter of each of the optionally cylindrical battery cells. Adjacent cell retainers are connected to each other so that the BMM carrier can be arranged within the adjacent cell retainers. Therein, the BMM carrier can carry the printed circuit board which is thereby arranged within the adjacent cell retainers. For example, the BMM carrier is arranged in two adjacent cell retainers in a form locking manner as described above.

Optionally, each of the battery cells is cylindrically shaped, and each of the cell retainers is at least partly cylindrically shaped and/or comprises a cylindrical through-hole. The cylindrical shape allows an effective and simple arrangement of cylindrically shaped battery cells within the cell retainers that may provide a cylindrical cavity for accommodating a battery cell. A cylindrical through-hole enables an efficient mounting of the battery cells by insertion of the battery cells into the through-hole at one end of the through-hole, wherein the battery cells are accessible at an opposite end of the through-hole, e.g., to provide electrical connection. Alternatively or additionally, the cell-retainers can have the shape of a cylinder segment and/or adjacent cell retainers can be connected with each other, in particular adjacent cell retainers within one row can be connected with each other. Optionally, each of the retainers comprises a ring-shaped projection to prevent the battery cells and/or the BMM being held therein from moving.

Optionally, the battery module comprises a removable bottom cover, and the BMM is removably arranged within the at least two cell retainers to enable a simple and efficient service and/or changing of the BMM. After the bottom cover is removed, the BMM can be removed, e.g., by pulling the BMM out of the at least two retainers in which the BMM is arranged.

Optionally, the battery module comprises an adapter and a collector circuit board adapted to electrically connect the at least one BMM with one or more of the battery cells, wherein the adapter is mounted to the collector circuit board and is arranged within one of the cell retainers in a form locking manner. The adapter is mounted to the collector circuit board to fixate the position of the collector circuit board relative to the adapter. The adapter is arranged within one of the cell retainers to be retained therein. Thus, the collector circuit board is held in a fixed position relative to the cell carrier within the battery module. This embodiment enables holding the collector circuit board in a space-saving manner as the adapter is retained within one of the cell retainers. The collector circuit board can be formed by a printed circuit board, i.e., a flat arrangement of electronics components, which only consumes a minimal amount of mounting space in z-direction. Optionally, the adapter is cylindrically shaped to be retained in one of the cell retainers in a form locking manner.

Optionally, the battery module comprises two or more BMMs, and the collector circuit board is adapted to electrically connect each of the battery cells with one of the BMMs. In this embodiment, two or more BMMs can be efficiently and space-savingly hold by the cell carrier, which is particularly useful if cylindrical cells are used in the battery module as the number of electrical connections of one of the BMMs may require that two or more BMMs are used to electrically interconnect each of the battery cells with one of the BMMs. To electrically connect each of the battery cells with one of BMMs the collector circuit board can comprise an electrical connector to which an interconnection arrangement can be connected, wherein the interconnection arrangement electrically interconnects the collector circuit board with each of the battery cells, e.g., via current collector structures, such as busbars.

Optionally, the plurality of cell retainers is arranged in a hexagonal pattern and/or the plurality of cell retainers is arranged in a meandering row so that a plurality of adjacently arranged rows form a hexagonal arrangement of cell retainers. The hexagonal pattern can also be called a honeycomb pattern. The hexagonal pattern means that cell retainers are surrounded in a regular pattern by six neighboring cell retainers of the cell carriers and/or of the battery module. The arrangement of the battery cell retainers in a hexagonal pattern allows a particularly space-saving construction of the battery module.

Optionally, the battery module comprises a plurality of the cell carriers, and each of the cell carriers is stackable, and the battery module is built from stacked cell carriers. I.e., the cell carriers are shaped and/or adapted to be arranged next to each other without leaving major construction space empty. For example, an effective arrangement of cell retainers can imply that neighboring cell carriers can be arranged next to each in other in a stacked manner without leaving a gap between battery cells that are retained within the cell retainers. Optionally, the cell carriers comprise mechanical connection members that are adapted to guide neighboring cell carriers during manufacturing so that the neighboring cell carriers are effectively arranged next to each other and adapted to mechanically hold the neighboring cell carriers next to each other in the mounted state. This enables that the adjacently arranged cell carriers can be arranged adjacent to each other in a stacked manner to provide a modular construction of the battery module and facilitate an efficient mountability of the battery module. Therein, the BMM is arranged within at least two of the cell retainers of one of the plurality of cell carriers and/or within cell retainers of two adjacently arranged cell carriers. I.e., a BMM can be retained by the cell retainers of a single cell carrier while an adjacent cell carrier retains battery cells only, or a BMM can be retained by cell retainers of adjacently arranged cell carriers. This efficiently enables highly variable possibilities of mounting the battery module by allowing different possibilities of arranging cell carriers, battery cells and the BMM for mounting the battery module.

According to another aspect of the present disclosure, a battery pack is provided, comprising a plurality of battery modules as described above. In other words, the battery pack comprises a plurality of battery modules, each of which comprising at least one cell carrier with a plurality of cell retainers, wherein the BMM is retained within at least two of the cell retainers. This allows a space-saving construction of the battery pack. The battery pack and/or the battery modules of the battery pack can comprise any of the above-mentioned optional features to achieve any of the above-mentioned technical effect.

Yet another aspect of the present disclosure refers to an electric vehicle comprising at least one battery module as described above and/or at least one battery pack as described above. In other words, the electric vehicle comprises a plurality of battery modules, each of which comprising at least one cell carrier with a plurality of cell retainers, wherein the BMM is retained within at least two of the cell retainers. This allows a space-saving design. The electrical vehicle and/or the battery modules mounted therein can comprise any of the above-mentioned optional features to achieve any of the above-mentioned technical effect.

Yet another aspect of the present disclosure refers to a BMM carrier adapted to retain a BMM within at least two adjacent cell retainers of at least one cell carrier for a battery module. Optionally, the BMM carrier comprises a housing made of plastic. Optionally, the housing comprises two cylindrical carrier sections that are adapted to be retained in one cell retainer, each. The BMM carrier enables that the retainers for holding the battery cells can be used to accommodate the BMM as described above. Thus, no separate holder or retainer to fix the BMM inside the battery module has to be provided. Thus, the BMM can be accommodated in a space-saving manner between the battery cells and within the battery module. The BMM carrier can comprise the optional features as described above with reference to the BMM carrier to achieve the above-mentioned technical effects of said features.

Yet another aspect of the present disclosure refers to a BMM arrangement, comprising: at least two BMMs, a collector circuit board adapted to electrically connect the at least two BMMs with one or more battery cells, and an adapter mounted to the collector circuit board, wherein the adapter is adapted to be arranged within a cell retainer of a cell carrier in a form locking manner. The BMM arrangement is adapted to be mounted in a battery module. The adapter retains the adapter within a battery cell retainer and therefore the BMM arrangement is held fixed in the battery module. Optionally, the BMM arrangement comprises one BMM carrier for each of the at least two BMMs, wherein each of the BMM carriers is adapted to retain a BMM within at least two adjacent cell retainers of the cell carrier. The BMM arrangement and its components can comprise the optional features as described above to achieve the above-mentioned technical effects of said features

Yet another aspect of the present disclosure refers to a method for assembling a battery module as described above, wherein the method comprises the steps of: a) providing a plurality of battery cells, at least one cell carrier, and at least one battery management module, BMM; wherein the at least one cell carrier comprises a plurality of cell retainers, wherein each of the cell retainers is adapted for holding one of the battery cells in a form locking manner; and b) arranging the at least one BMM within at least two of the cell retainers. This method provides a battery module as described before. The method can be adapted so that the assembled battery module comprises the above-mentioned optional features.

### Specific Embodiments

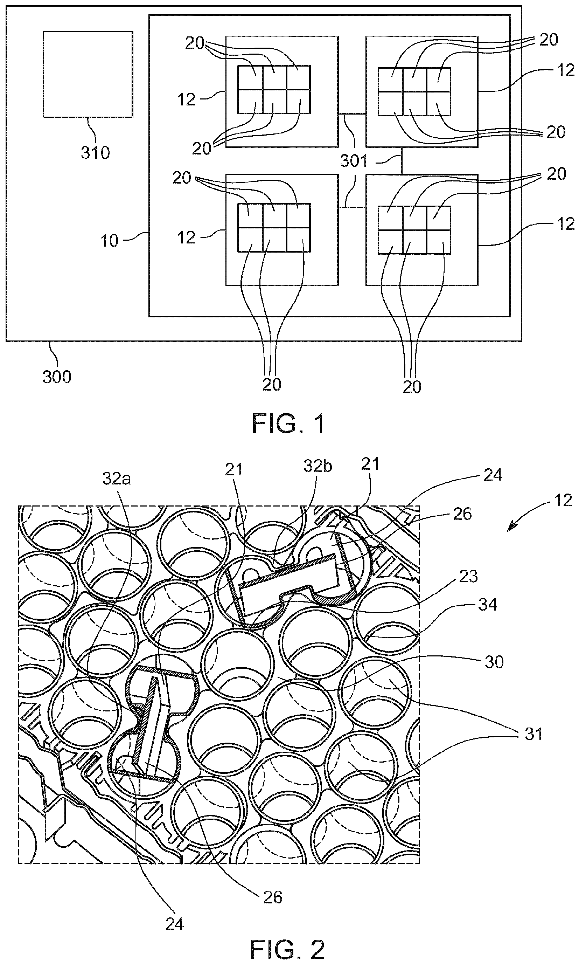

Fig. 1 illustrates a schematic view of an electric vehicle 300 according to an embodiment of the invention. The electric vehicle 300 is propelled by an electric motor 310, using energy stored in rechargeable batteries arranged in a battery pack 10. The battery pack 10 is a set of any number of battery modules 12. Rechargeable batteries are used as a battery module 12 formed of a plurality of secondary battery cells 20. Components of the battery pack 10 include the individual battery modules 12, and interconnects 301, which provide electrical conductivity between battery modules 12. Each of the battery modules 12 comprises battery cells 20.

Fig. 2 illustrates a sectional view of a battery module 12 according to an embodiment of the invention.

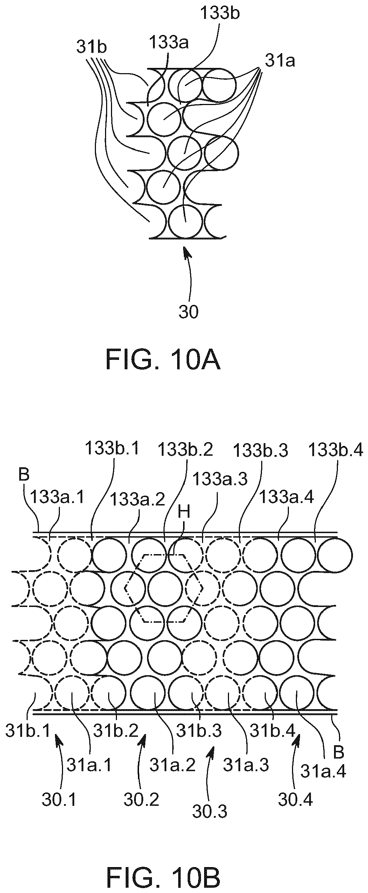

The battery module 12 comprises a cell carrier 30 comprising a plurality of cell retainers 31. The plurality of cell retainers 31 is arranged in a hexagonal pattern as also shown in Fig. 10 and described with reference thereto. Specifically, a plurality of the cell retainers 31 is arranged in meandering row so that a plurality of adjacently arranged rows form a hexagonal arrangement of cell retainers 31. Optionally, the cell carrier 30 is made of a polymer to provide a lightweight cell carrier 30 that is efficient to manufacture.

Each of the cell retainers 31 is adapted for holding one of the battery cells 20 in a form locking manner. Each of the battery cells 20 is cylindrically shaped (not shown in Fig. 2) and each of the cell retainers 31 is cylindrically shaped. The shape of the battery cells 20 and of the cell retainers 31 match in that sense that the battery cells 20 can be held by the cell retainers 31 in a form locking manner. Each of the cell retainers 31 comprises a cylindrical through-hole in which one of the battery cells 20 can be inserted to be retained in the cell retainer 31. Each of the retainers 31 comprises a projection 34 to prevent the battery cells 20 held therein from moving. The projection 34 is ring-shaped to effectively reduce the diameter of the through-hole and/or the cell retainer 31.

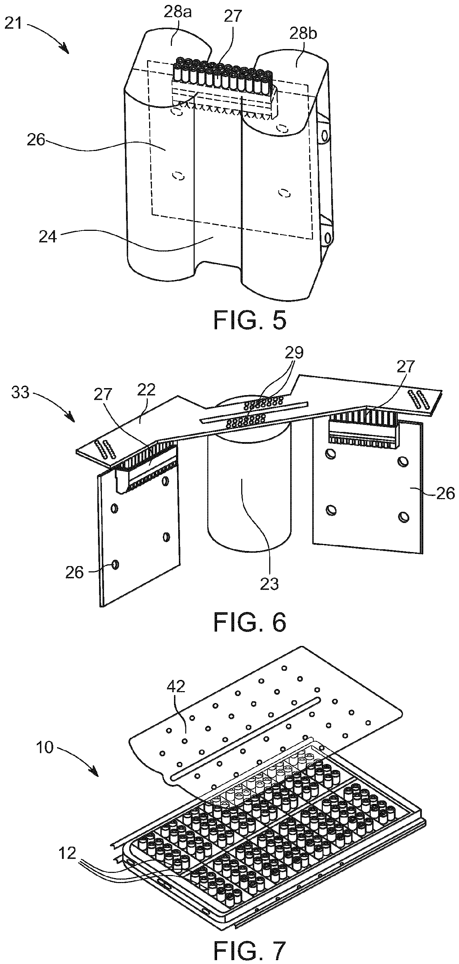

The battery module 12 comprises two battery management modules 21, abbreviated as BMMs 21. Each of the BMMs 21, is arranged in two of the cell retainers 31. In this specific embodiment, the BMMs 21 are arranged within the same meandering row of the cell carrier 30 and in two pairs 32a, 32b of adjacent cell retainers 31 of the same meandering row. The cell retainer 31 between the two pairs 32a, 32b of adjacent cell retainers 31 retains an adapter 23 which is further detailed with reference to Fig. 6. The two pairs 32a, 32b of adjacent cell retainers 31 are pairs of connected cell retainers 31. I.e., the cell carrier 30 is shaped so that each of the cell retainers 31 of the two pairs 32a, 32b is a cylinder segment, wherein a circumferential section of the cell retainer 31 of one of the two pairs 32a, 32b is open to connect to the other cell retainer 31 of said pair 32a, 32b.

The battery module 12 comprises two BMM carriers 24 adapted to retain the BMMs 21 within the cell retainers 31. I.e., the battery module 12 comprises one BMM carrier 24 for each of the BMMs 21. By using the BMM carriers 24, the BMMs 21 are arranged within the cell retainers 31 in a form locking manner. Each of the BMM carriers 24 is adapted to hold a printed circuit board 26 of one of the BMMs 21. The BMM carrier 24 is made of a polymer. The printed circuit board 26 of each of the BMMs 21 is arranged in one of the two pairs 32a, 32b of cell retainers 31. Optionally, the plastic BMM carrier 24 is held with a plastic clip system into the cell carrier 30 (not shown). The BMM carriers 24 are further detailed with respect to Fig. 5.

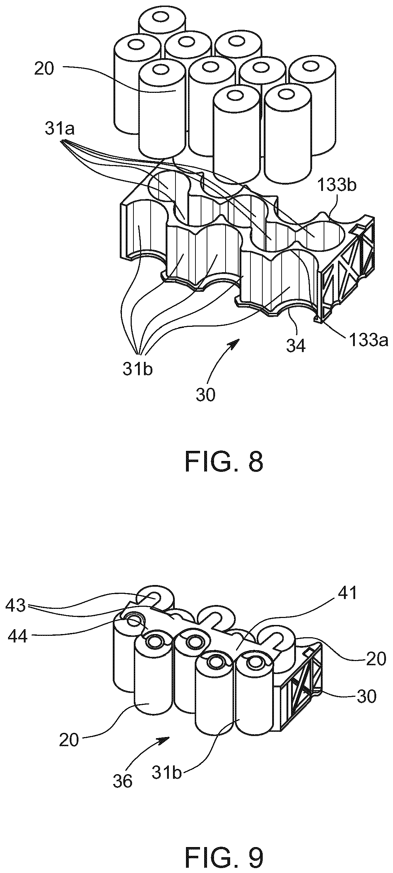

The BMMs 21, together with the BMM carriers 24, having the same shape as the battery cells 20 can be placed between a cell stack formed by the battery cells 20. Combined with a modular battery module 12, e.g., a battery module 12 comprising a plurality of cell carriers 30 as shown in Figs. 8 and 9 and described with reference thereto, one advantage is that no separate part has to be produced to retain the BMMs 21 in the battery module 12

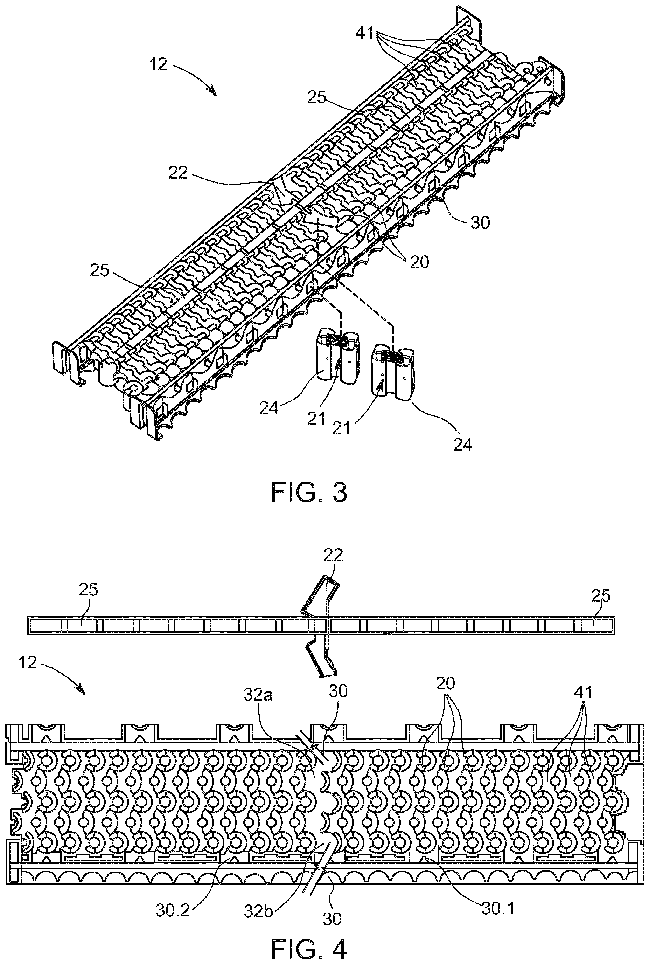

Fig. 3 illustrates a perspective view of a battery module 12 according to an embodiment of the invention.

The battery module 12 comprises the cell carrier 30 as shown in Fig. 2 and as explained with reference thereto. The two BMMs 21 are shown below the cell carrier 30. The BMMs 21 can be mounted to the cell carrier 30 by inserting the BMMs 21 and the BMM carriers 24 into the cell retainers 31 as indicated by the dashed line.

The battery module 12 comprises a collector circuit board 22 which is adapted to electrically connect each of the battery cells 20 with one of the BMMs 21. The battery module 12 comprises an interconnection arrangement 25 and a plurality of busbars 41. The interconnection arrangement 25 comprises a flat flex cable (FFC) and the collector circuit board 22 comprises a flexible printed circuit (FPC). The interconnection arrangement 25 is electrically connected with the collector circuit board 22 which is electrically connected to the BMMs 21 as explained with reference to Fig. 6. The interconnection arrangement 25 extends through the battery module 12 to electrically interconnect the collector circuit board 22 with each of the busbars 41. The busbars 41 are adapted and arranged to electrically interconnect a plurality of battery cells 20 with each other and with the collector circuit board 22 via the interconnection arrangement 25. Specifically, each of the busbars 41 electrically interconnects a meandering row of battery cells 20 with each other. Thus, each of the plurality of battery cells 20 is electrically interconnected with one of the BMMs 21. The BMMs 21 are to be mounted by inserting the BMMs 21 and the BMM carriers into the pairs 32a, 32b of adjacent cell retainers 31 that are arranged below the collector circuit board 27.

The battery cells 20 are cylindrical cells with a diameter of at least 30 mm, optionally min. 32mm. Optionally, the diameter of the cell retainer 31 is at least 30 mm, optionally, at least 32 mm. This enables holding battery cells 20 of a similar diameter in the cell retainers 31 and provides sufficient space for the BMMs 21 to be arranged within the battery retainers 31.

Fig. 4 illustrates a top view of the battery module 12 and the collector circuit board 22 according to an embodiment of the invention.

The representation of the battery module 12 and the collector circuit board 22 with the interconnection arrangement 25 enables to show the arrangement of the pairs 32a, 32b of adjacent cell retainers 31 in which the BMMs 21 are to be arranged. Between the two pairs 32a, 32b of adjacent cell retainers 31, another cell retainer 31 is arranged. In this cell retainer 31, i.e., the cell retainer 31 which is arranged between the two pairs 32a, 32b of adjacent cell retainers 31, an adapter 23 which is shown in Fig. 6 and described with reference thereto is to be retained for mounting the collector circuit board 22 to the battery module 12.

In this embodiment, the battery module 12 comprises two adjacently arranged cell carriers 30.1, 30.2. The cell carriers 30.1, 30.2 are stackable to be stacked to form a modular battery module 12 as described with reference to Figs. 8 and 9. The pairs 32a, 32b of adjacent cell retainers 31 in which the BMMs 21 are to be arranged are comprised by cell carrier 30.1 as indicated schematically. The cell carrier 30.2 adjacently arranged to the cell carrier 30.1 with the pairs 32a, 32b of adjacent cell retainers 31 in which the BMMs 21 are to be arranged comprises battery cells 20 only.

Fig. 5 illustrates a perspective and semi-transparent view of a BMM carrier 24 carrying a battery management module 21 according to an embodiment of the invention and as it is shown in Figs. 2 and 3 and described with reference thereto.

The BMM carrier 24 is adapted to retain the BMM 21 within two adjacent cell retainers 31 of a cell carrier 30 for a battery module 12. The BMM carrier 24 comprises a housing made of plastic. The housing comprises two cylindrical carrier sections 28a, 28b that are adapted to be retained in one of the cell retainers 31, each. The carrier sections 28a, 28b have a diameter that matches the diameter of the cell retainers 31 in the sense that carrier sections 28a, 28b can be held in a form locking manner within the cell retainers 31.

The BMM 21 comprises a printed circuit board 26 (indicated with a dotted line) with an electrical connector 27. The printed circuit board 26 is retained within the BMM carrier 24 so that the electrical connector 27 is accessible. The printed circuit board 26 extends through the BMM carrier 24 from one of the carrier sections 28a to the other carrier section 28b.

Fig. 6 illustrates a perspective view of a BMM arrangement 33 according to an embodiment of the invention. The BMMs arrangement 33 comprises two BMMs 21, a collector circuit board 22 adapted to electrically connect the two BMMs 21 to a plurality of battery cells 20, and an adapter 23 mounted to the collector circuit board 22. The BMM arrangement 33 as shown in Fig. 6 is already at least partly shown in or explained with reference to Figs. 1 to 5.

The adapter 23 is adapted to be arranged within a cell retainer 31 of a cell carrier 30 in a form locking manner. In this embodiment, the adapter 23 is schematically illustrated as a cylinder. The adapter 23 has a diameter that matches the diameter of the cell retainers 31 and the sense that the adapter 23 can be held in a form locking manner within the cell retainer 31. The adapter 23 is mounted to the collector circuit board 22 to ensure that the collector circuit board 22 is held fixed in the battery module 12 if the adapter 23 is mounted to the cell retainer 31. The adapter 23 can be hollow to retain electrical components.

The collector circuit board 22 has a symmetric shape, wherein the adapter 23 is mounted centrally with respect to the collector circuit board 22. The collector circuit board 22 has two outwardly extending sections at which the electrical connectors 27 of the BMMs 21 are connectable to the collector circuit board 22. The outwardly extending sections of the collector circuit board 22 are arranged so that the printed circuit boards 26 and therefore the BMMs 21 are arrangeable in two pairs 32a, 32b of adjacent cell retainers 31.

The collector circuit board 22 comprises an interconnection connector 29 to electrically interconnect the collector circuit board 22 and the interconnection arrangement 25 as shown in Figs. 3 and 4 and described with reference thereto. The collector circuit board 22 is adapted to be connected to the two printed circuit boards 26 via the electrical connectors 27.

Optionally, the BMM arrangement 33 comprises two BMM carriers 24 to retain each of the printed circuit boards 26 as explained with reference to Fig. 5.

Fig. 7 illustrates a perspective view of a battery pack 10 according to an embodiment of the invention.

The battery pack 10 comprises a plurality of battery modules 12 as described with reference to Fig. 1 to 6. The battery pack 10 comprises a removable cover which provides a removable bottom cover 42 for the battery modules 12. Each of the BMMs 21 is removably arranged within two of the cell retainers 31 of the cell carriers 30 of the battery modules 12.

A method for assembly of a battery module 12 as comprised by the battery pack 10 comprises the steps of: providing a plurality of battery cells 20, the cell carrier 30, and two BMMs, 21, and arranging the two BMMs 21 within the cell retainers 31 of the cell carrier 30. The electrical interconnection of the components is achieved by attaching, e.g., welding, the interconnection arrangement 25 to the busbars 41 of the cell stack, and connecting the interconnection arrangement 25 with the collector circuit board 22. Subsequently, the BMMs 21 within the plastic carriers 24 are connected from the bottom into empty battery slots, i.e., cell retainers 31. The electrical connectors 27 of the BMMs 21 are thereby attached to corresponding connector of collector circuit board 22.

Fig. 8 illustrates a perspective view of a cell carrier 30 and a plurality of battery cells 20. The cell carrier 30 as shown in Fig. 8 can be used to assemble a battery module 12 according to the invention.

The cell carrier 30 comprises two meandering ribs 133a, 133b being spaced apart from each other. The cell carriers 30 and thus the meandering ribs 133a, 133b are made of a polymer.

The cell carrier 30 comprises a first plurality of cell retainers 31a and a second plurality of cell retainers 31b, wherein each of the cell retainers 31a, 31b is adapted for holding a battery cell 20 in a form locking manner. Each of the plurality of cell retainers 31a, 31b comprises five cell retainers 31a, 31b.

The meandering ribs 133a, 133b delimit the cell retainers 31a, 31b, i.e., the surface of the cell retainers 31a, 31b is formed by the meandering ribs 133a, 133b. The meandering ribs 133a, 133b provide the retainers 31a, 31b in the form cavities for accommodating battery cells 20.

The first plurality of cell retainers 31a of the cell carrier 30 is arranged between the two meandering ribs 133a, 133b. The two meandering ribs 133a, 133b are arranged and shaped so that the first plurality of cell retainers 31a is meanderingly arranged between the two ribs 133a, 133b. The first plurality of cell retainers 31a is arranged in a first meandering row.

The two meandering ribs 133a, 133b basically extends in a principal extension plane of the respective rib 133a, 133b, each, wherein the meandering, i.e., undulating, ribs 133a, 133b alternatingly extends to either of the two opposite sides with respect the principal extension plane. Therein, each of the two meandering ribs 133a, 133b has a width that periodically changes along the two meandering ribs 133a, 133b to form the cell retainers 31a, 31b in a meandering, undulating manner.

The second plurality of cell retainers 31b is arranged oppositely to the first plurality of cell retainers 31a and separated therefrom by one of the at least two meandering ribs 133a. I.e., the second plurality of cell retainers 31b is separated from the first plurality of cell retainers 31a by the first meandering rib 133a. Thus, the second plurality of cell retainers 31b is arranged in a second meandering row which is separated from the first meandering row by the first meandering rib 133a.

Each of the first and second plurality of cell retainers 31a, 31b is arranged in a meandering row so that a plurality of adjacently arranged rows form a hexagonal arrangement of cell retainers 31a, 31b described in detail with reference to Fig. 10. Thus, the cell retainers 31a, 31b are arranged in a hexagonal pattern.

Each of the cell retainers 31a, 31b is cylindrically shaped and comprises a cylindrical through-hole or a section thereof. Specifically, each of the first plurality of cell retainers 31a comprises a through-hole, and each of the second plurality of cell retainers 31b is formed by a cylinder segment and comprises a corresponding opening in form of a section of a through-hole. Each of the retainers 31a, 31b comprises a projection 34 to prevent the battery cells 20 and/or the BMM 21 held therein from moving, in particular along their cylindrical axes. Each of the projections 34 is ring-shaped to effectively reduce the diameter of the respective through-hole and/or the cell retainers 31a, 31b. Specifically, each of the projections 34 of the first plurality of cell retainers 31a is o-ring-shaped (not shown in Fig. 8) and each of the projections 34 of the second plurality of cell retainers 31b is shaped as a segment of a ring.

The first plurality of cell retainers 31a comprises a plurality of connected cell retainers 31a. I.e., the cell carrier 30 is shaped so that each of the first plurality of cell retainers 31a is shaped as a cylinder segment, wherein a circumferential section of each of the cell retainer 31a is open connect to an adjacent cell retainer 31a of the first plurality of cell retainers 31a. Thus, the first plurality of cell retainers 31a comprises a meandering row of interconnected cell retainers 31a.

Similarly, the second plurality of cell retainers 31b comprises a plurality of connected cell retainers 31b. I.e., the cell carrier 30 is shaped so that each of the second plurality of cell retainers 31b is shaped as a cylinder segment, wherein a circumferential section of each of the cell retainers 31b is open connect to an adjacent cell retainer 31b of the second plurality of cell retainers 31b. Thus, the second plurality of cell retainers 31b comprises a meandering row of interconnected cell retainers 31b.

The cell carrier 30 is stackable so that a battery module 12 can be built from stacked cell carriers 30.

The cell carrier 30 comprises an even number of cell retainers 31a, 31b, i.e., the cell carrier 30 comprises an odd number of first cell retainers 31a and an odd number of second cell retainers 31b. In total, the cell carrier comprises 10 cell retainers 31a, 31b.

Each of the battery cells 20 has a cylindrical shape. The shape of the battery cells 20 match the shape of the cell retainers 31a, 31b in the sense that the battery cells 20 can be held fixed by and within the cell retainers 31a, 31b. The battery cells 20 can be mounted to the cell carrier 30 by inserting them along their respective cylinder axis into the cell retainers 31a, 31b. Each of the cell retainers 31a, 31b comprises a projection 34 that is dimensioned so that the battery cells 20 are prevented from moving through the cell retainers 31a, 31b. To improve fasting the battery cells 20 within the cell retainers 31a, 31b, the battery module 12 can comprise an adhesive. The adhesive can be applied to the surfaces that delimit the cell retainers 31a, 31b and/or to the projections 34.

Fig. 9 illustrates a perspective view of a cell assembly 36. The cell assembly 36 as shown in Fig. 9 can be used to assemble a battery module 12 according to the invention.

The cell assembly 36 comprises the cell carrier 30 as shown in Fig. 8 and described with reference thereto, the plurality of battery cells 20 as described above and a busbar 41.

The plurality of battery cells 20 is arranged in the cell retainer 31a, 31b of the cell carrier 30 as described with reference to Fig. 8.

The plurality of battery cells 20 is electrically interconnected by the busbar 41 welded to the battery cells 20 to electrically interconnect the battery cells 20 with each other.

The busbar 41 comprises a plurality of connection members 43, each of which is adapted and arranged to electrically connect to a terminal of one of the battery cells 20 retained by the first plurality of cell retainers 31a. The connection members 43 are arranged in a meandering row corresponding to the meandering row in which the first plurality of cell retainers 31a is arranged.

The busbar 41 comprises a covering section 44 adapted and arranged to connect to a plurality of battery cell casings, also called housing, of the battery cells 20. The covering section 44 is arranged in a meandering manner so as to correspond to the meandering row in which the second plurality of cell retainers 31b is arranged.

In this example, a 5p connection is designed as shown, wherein 10 battery cells 20 are placed into the plastic cell carrier 30 and the busbar 41 is welded with its covering section 44 on a negative potential on the shoulder of one row, i.e., on the battery cells 20 retained by the second plurality of cell retainers 31b, and with the connection members 43 on the positive terminal on another row, i.e., on the battery cells 20 retained by the first plurality of cell retainers 31a.

A plurality of cell assemblies as shown in Fig. 9 can be stacked together to form a battery module 12 as shown in Fig. 3 and described with reference thereto.

Fig. 10 illustrates a schematic top view of a plurality of adjacently arranged cell carriers 30, 30.1, 30.2, 30.3, 30.4 according to the embodiment of Fig. 8. The cell carriers 30, 30.1, 30.2, 30.3, 30.4 are those as illustrated in Fig. 8 and described in detail with reference thereto. Fig. 10 illustrates the hexagonal arrangement of the first cell retainers 31a, 31a.1, 31a.2, 31a.3, 31a.4 and the second cell retainers 31b, 31b.1, 31b.2, 31b.3, 31b.4 in which battery cells 20 are to be retained.

For reference, the cell retainer 30 as illustrated in Fig. 8 is illustrated in Fig. 10 (A) in a schematic top view. In this representation, the projections 34 of the cell carrier 30 are not shown for the sake of simplicity.

Fig. 10 (B) illustrates four cell carriers 30.1, 30.2, 30.3, 30.4 arranged adjacent to each other. In this representation, the projections 34 of the cell carriers 30 are not shown for the sake of simplicity. For each of the cell carriers 30.1, 30.2, 30.3, 30.4 only one of the first cell retainers 31a.1, 31a.2, 31a.3, 31a.4 and one of the second cell retainers 31b.1, 31b.2, 31b.3, 31b.4 is indicated. To distinguish adjacently arranged cell carriers 30.1, 30.2, 30.3, 30.4 from each other, the cell carriers 30.1, 30.2, 30.3, 30.4 are alternatingly indicated with a solid line or with a dashed line.

For example, regarding cell carrier 30.2, each of the first cell retainers 31a.2 is indicated by a circle with a solid line and each of the second cell retainers 31b.2 is indicated by a circle with a line which is half solid. Still considering the cell carrier 30.2, each of the first cell retainers 31a.2 is arranged in a meandering row, and each of the second cell retainers 31b.2 is arranged in a meandering row. The first cell retainers 31a.2 and the second cell retainers 31b.2 are separated from each other by meandering rib 133a.2. The first cell retainers 31a.3 and the second cell retainers 31b.3 of the adjacent cell carrier 30.3, indicated by dashed lines, are separated from each other by meandering rib 133a.3. The second cell retainers 31b.1 and the first cell retainers 31a.1 of the adjacent cell carrier 30.1, indicated by dashed lines, are separated from each other by meandering rib 133a.1. The above consideration can be repeated analogously for any of the cell carriers 30.1, 30.2, 30.3, 30.4.

For an illustrative purpose, a boundary B is indicated that represents a section of the exterior contour of the four cell carriers 30.1, 30.2, 30.3, 30.4. The cell retainers 31a.1, 31a.2, 31a.3, 31a.4, 31b.1, 31b.2, 31b.3, 31b.4 which are not located adjacent to the boundary B of the adjacently arranged cell carriers 30.1, 30.2, 30.3, 30.4 are arranged in a hexagonal pattern, i.e., each of the cell retainers 31a.1, 31a.2, 31a.3, 31a.4, 31b.1, 31b.2, 31b.3, 31b.4 which are not located adjacent to the boundary B of the adjacently arranged cell carriers 30.1, 30.2, 30.3, 30.4 has six adjacently arranged cell retainers 31a.1, 31a.2, 31a.3, 31a.4, 31b.1, 31b.2, 31b.3, 31b.4

A hexagon H is indicated with a dash-dotted line to illustrate the hexagonal pattern in which the cell retainers 31a.1, 31a.2, 31a.3, 31a.4, 31b.1, 31b.2, 31b.3,31b.4 are arranged. The hexagon H is not physically present, but is indicated only to illustrate the arrangement of the cell retainers 31a.1, 31a.2, 31a.3, 31a.4, 31b.1, 31b.2, 31b.3,31b.4. The hexagon H at this particular position illustrates that the second cell retainer 31b.3 of the cell carrier 30.3 and being arranged in the center of the hexagon H has six neighboring cell retainers 31a.2, 31a.3, 31b.3, namely three first cell retainers 31a.2 of the adjacently arranged cell carrier 30.2, one first cell retainer 31a.3 of said cell retainer 30.3 and two second cell retainers 31b.3 of said cell retainer 30.3. The above consideration can be repeated analogously for any of the cell retainers 31a.1, 31a.2, 31a.3, 31a.4, 31b.1, 31b.2, 31b.3,31b.4 which are not located adjacent to the boundary B of the adjacently arranged cell carriers 30.1, 30.2, 30.3, 30.4.

Thus, each of the first and second plurality of cell retainers 31a.1, 31a.2, 31a.3, 31a.4, 31b.1, 31b.2, 31b.3, 31b.4, except the cell retainers 31a.1, 31a.2, 31a.3, 31a.4, 31b.1, 31b.2, 31b.3, 31b.4 at the boundary B of the cell carriers 30.1, 30.2, 30.3, 30.4, is arranged in a meandering row so that a plurality of adjacently arranged rows form a hexagonal arrangement of cell retainers 31a.1, 31a.2, 31a.3, 31a.4, 31b.1, 31b.2, 31b.3, 31b.4.

### Reference signs

- 10: battery pack
- 12: battery module
- 20: battery cell
- 21: battery management module, BMM
- 22: collector circuit board
- 23: adapter
- 24: BMM carrier
- 25: interconnection arrangement
- 26: printed circuit board
- 27: electrical connector
- 28a, 28b: carrier section
- 29: interconnection connector
- 30, 30.1, 30.2, 30.3, 30.4: cell carrier
- 31, 31a, 31b: cell retainer
- 32a, 32b: pair of adjacent cell retainers
- 33: BMM arrangement
- 34: projection
- 36: cell assembly
- 41: busbar
- 42: bottom cover
- 43: connection member
- 44: covering section

- 31a, 31a.1, 31a.2, 31a.3, 31a.4: first cell retainer
- 31b, 31b.1, 31b.2, 31b.3,31b.4: second cell retainer
- 133a, 133a.1, 133a.2, 133a.3, 133a.4: meandering rib
- 133b, 133b.1, 133b.2, 133b.3, 133b.4: meandering rib

- 300: vehicle
- 301: interconnects
- 310: motor

- B: boundary
- H: hexagon

## Claims

1. A battery module (12), comprising:
- a plurality of battery cells (20),
- at least one cell carrier (30, 30.1, 30.2, 30.3, 30.4), and
- a battery management module, BMM, (21); wherein
- the at least one cell carrier (30, 30.1, 30.2, 30.3, 30.4) comprises a plurality of cell retainers (31), wherein each of the cell retainers (31) is adapted for holding one of the battery cells (20) in a form locking manner; wherein
- the BMM (21) is arranged within at least two of the cell retainers (31).

2. The battery module (12) according to claim 1, wherein
- the BMM (21) is arranged within at least two of the cell retainers (31) in a form locking manner.

3. The battery module (12) according to any one of the preceding claims, wherein
- the battery module (12) comprises a BMM carrier (24) adapted to retain the BMM (21) within the at least cell retainers (31).

4. The battery module (12) according to claims 3, wherein
- the BMM carrier (24) is arranged in two or more adjacent cell retainers (31).

5. The battery module (12) according to any one of the preceding claims; wherein
- each of the battery cells (20) is cylindrically shaped; and
- each of the cell retainers (31) is at least partly cylindrically shaped and/or comprises a cylindrical through-hole.

6. The battery module (12) according to any one of the preceding claims, wherein
- the battery module (12) comprises a removable bottom cover (42), and
- the BMM (21) is removably arranged within the at least two cell retainers (31).

7. The battery module (12) according to any one of the preceding claims, wherein
- the battery module (12) comprises an adapter (23) and a collector circuit board (22) adapted to electrically connect the at least one BMM (21) with one or more of the battery cells (20), wherein
- the adapter (23) is mounted to the collector circuit board (22) and is arranged within one of the cell retainers (31) in a form locking manner.

8. The battery module (12) according to claim 7, wherein
- the battery module (12) comprises two or more BMMs (21), and
- the collector circuit board (22) is adapted to electrically connect each of the battery cells (20) with one of the BMMs (21).

9. The battery module (12) according to any one of the preceding claims; wherein
- the plurality of cell retainers (31) is arranged in a hexagonal pattern and/or
- the plurality of cell retainers (31) is arranged in a meandering row so that a plurality of adjacently arranged rows form a hexagonal arrangement of cell retainers (31).

10. The battery module (12) according to any one of the preceding claims; wherein
- the battery module (12) comprises a plurality of the cell carriers (30, 30.1, 30.2, 30.3, 30.4), and each of the cell carriers (30, 30.1, 30.2, 30.3, 30.4) is stackable; and
- the battery module (12) is built from stacked cell carriers (30, 30.1, 30.2, 30.3, 30.4); wherein
- the BMM (21) is arranged within at least two of the cell retainers (31, 31a, 31b) of one of the plurality of cell carriers (30, 30.1, 30.2, 30.3, 30.4) and/or within cell retainers (31, 31a, 31b) of two adjacently arranged cell carriers (30, 30.1, 30.2, 30.3, 30.4).

11. A battery pack (10) comprising a plurality of battery module (12) according to any one of the preceding claims.

12. An electric vehicle (300) comprising the battery module (12) according to any one of the claims 1 to 10 and/or a battery pack (10) as claimed in claim 11.

13. A BMM carrier (24) adapted to retain a BMM (21) within at least two adjacent cell retainers (31) of at least one cell carrier (30, 30.1, 30.2, 30.3, 30.4) for a battery module (12).

14. A BMM arrangement (33), comprising:
- at least two BMMs (21),
- a collector circuit board (22) adapted to electrically connect the at least two BMMs (21) with one or more battery cells (20), and
- an adapter (23) mounted to the collector circuit board (22);
- wherein the adapter (23) is adapted to be arranged within a cell retainer (31) of a cell carrier (30, 30.1, 30.2, 30.3, 30.4) in a form locking manner.

15. A method for assembly of a battery module (12) as claimed in claim 1, wherein the method comprises the steps of:
a) providing a plurality of battery cells (20), at least one cell carrier (30, 30.1, 30.2, 30.3, 30.4), and at least one battery management module, BMM, (21); wherein the at least one cell carrier (30, 30.1, 30.2, 30.3, 30.4) comprises a plurality of cell retainers (31), wherein each of the cell retainers (31) is adapted for holding one of the battery cells (20) in a form locking manner; and
b) arranging the at least one BMM (21) within at least two of the cell retainers (31).

## Amended claims

### Amended claims in accordance with Rule 137(2) EPC.

1. A battery module (12) for an electric vehicle, comprising:
- a plurality of battery cells (20),
- at least one cell carrier (30, 30.1, 30.2, 30.3, 30.4), and
- a battery management module, BMM, (21); wherein
- the at least one cell carrier (30, 30.1, 30.2, 30.3, 30.4) comprises a plurality of cell retainers (31), wherein each of the cell retainers (31) is adapted for holding one of the battery cells (20) in a form locking manner; wherein
- the BMM (21) is arranged within at least two of the cell retainers (31).

2. The battery module (12) according to claim 1, wherein
- the BMM (21) is arranged within at least two of the cell retainers (31) in a form locking manner.

3. The battery module (12) according to any one of the preceding claims, wherein
- the battery module (12) comprises a BMM carrier (24) adapted to retain the BMM (21) within the at least cell retainers (31).

4. The battery module (12) according to claims 3, wherein
- the BMM carrier (24) is arranged in two or more adjacent cell retainers (31).

5. The battery module (12) according to any one of the preceding claims; wherein
- each of the battery cells (20) is cylindrically shaped; and
- each of the cell retainers (31) is at least partly cylindrically shaped and/or comprises a cylindrical through-hole.

6. The battery module (12) according to any one of the preceding claims, wherein
- the battery module (12) comprises a removable bottom cover (42), and
- the BMM (21) is removably arranged within the at least two cell retainers (31).

7. The battery module (12) according to any one of the preceding claims, wherein
- the battery module (12) comprises an adapter (23) and a collector circuit board (22) adapted to electrically connect the at least one BMM (21) with one or more of the battery cells (20), wherein
- the adapter (23) is mounted to the collector circuit board (22) and is arranged within one of the cell retainers (31) in a form locking manner.

8. The battery module (12) according to claim 7, wherein
- the battery module (12) comprises two or more BMMs (21), and
- the collector circuit board (22) is adapted to electrically connect each of the battery cells (20) with one of the BMMs (21).

9. The battery module (12) according to any one of the preceding claims; wherein
- the plurality of cell retainers (31) is arranged in a hexagonal pattern and/or
- the plurality of cell retainers (31) is arranged in a meandering row so that a plurality of adjacently arranged rows form a hexagonal arrangement of cell retainers (31).

10. The battery module (12) according to any one of the preceding claims; wherein
- the battery module (12) comprises a plurality of the cell carriers (30, 30.1, 30.2, 30.3, 30.4), and each of the cell carriers (30, 30.1, 30.2, 30.3, 30.4) is stackable; and
- the battery module (12) is built from stacked cell carriers (30, 30.1, 30.2, 30.3, 30.4); wherein
- the BMM (21) is arranged within at least two of the cell retainers (31, 31a, 31b) of one of the plurality of cell carriers (30, 30.1, 30.2, 30.3, 30.4) and/or within cell retainers (31, 31a, 31b) of two adjacently arranged cell carriers (30, 30.1, 30.2, 30.3, 30.4).

11. A battery pack (10) comprising a plurality of battery module (12) according to any one of the preceding claims.

12. An electric vehicle (300) comprising the battery module (12) according to any one of the claims 1 to 10 and/or a battery pack (10) as claimed in claim 11.

13. A method for assembly of a battery module (12) as claimed in claim 1, wherein the method comprises the steps of:
a) providing a plurality of battery cells (20), at least one cell carrier (30, 30.1, 30.2, 30.3, 30.4), and at least one battery management module, BMM, (21); wherein the at least one cell carrier (30, 30.1, 30.2, 30.3, 30.4) comprises a plurality of cell retainers (31), wherein each of the cell retainers (31) is adapted for holding one of the battery cells (20) in a form locking manner; and
b) arranging the at least one BMM (21) within at least two of the cell retainers (31).
